# EUROPÄISCHE PATENTSCHRIFT

(11) **EP 2 596 728 B1**
(45) Veröffentlichungstag und Bekanntmachung des Hinweises auf die Patenterteilung: **19.03.2014**
(21) Anmeldenummer: 11401641.3
(22) Anmeldetag: 24.11.2011
(51) Int. Cl.: A47J 31/46

(54) **Zentralauslauf eines Getränkebereiters**
Central discharge of a beverage preparer
Sortie centrale d'un dispositif de préparation de boissons

(43) Veröffentlichungstag der Anmeldung: 29.05.2013
(73) Patentinhaber: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(56) Entgegenhaltungen:
- EP-A1- 0 820 715
- EP-A1- 2 186 454

## Beschreibung

Die Erfindung betrifft einen Zentralauslauf eines Getränkebereiters nach dem Oberbegriff des Patentanspruches 1.

Ein derartiger Zentralauslauf eines Getränkebereiters kommt zur Abgabe eines Getränkes oder eines Mischgetränkes und/oder von Wasser beziehungsweise Wasserdampf zum Einsatz, wobei der Wasserdampf beispielsweise zum Aufschäumen eines Getränkes oder zur Erzeugung von Schaum, insbesondere von Milchschaum benötigt wird. Der Zentralauslauf weist daher mehrere, mit einem Strömungsleitungssystem verbundene Fluidanschlussstücke und eine Fluidweiche mit mehreren Ausgabeleitungen auf. Die Ausgabeleitungen münden jeweils in eine Ausgabedüse, über die das fertiggestellte Getränk beziehungsweise Wasser oder Wasserdampf entnommen werden können.

Aus der EP 2 186 454 A1 ist bereits ein Getränkebereiter in Form eines Kaffeeautomaten bekannt, bei dem der Zentralauslauf derart gestaltet ist, dass wahlweise ein gemeinsames Befüllen von zwei Getränkebehältern oder lediglich einem einzigen Getränkebehälter möglich ist. Die Lösung betrifft daher einen Zentralauslauf mit einer Kanalgabel, deren Teilkanäle je eine Ausgabeleitung bilden und in die je ein Kaffeezuführkanal mündet. Zwar konnte mit dieser Lösung die Zahl der Bauteile des Zentralauslaufs entscheidend verringert werden. Ein Nachteil dieser Lösung besteht jedoch darin, dass im Falle einer erforderlichen Reinigung, Wartung oder Reparatur des Zentralauslaufs ein Auseinandernehmen beziehungsweise Zusammensetzen der Einzelteile erheblich erschwert ist, da die Einzelteile des Zentralauslaufs einzeln aus dem Getränkebereiter entfernt beziehungsweise wieder eingesetzt werden müssen. Auf Grund der platzsparenden Anordnung sämtlicher Bauteile in dem Getränkebereiter ist diese Tätigkeit mühselig und kompliziert. Dieser Umstand ist insbesondere von Bedeutung, weil beispielsweise die Reinigung der Bauteile häufig nicht von einem Fachmann, sondern von Privatpersonen durchgeführt werden muss, die einen derartigen Getränkebereiter besitzen.
Eine ähnliche Lösung mit analogen Nachteilen geht auch aus der EP 2 301 396 A1 hervor.

Aus der EP 0 820 715 A1 ist ein Zentralauslauf eines Getränkebereiter bekannt, der ein Strömungsleitungssystem mit Fluidanschlusstücken umfasst. Der Zentralauslauf kann hierbei vom Getränkebereiter abgenommen werden. Die Funktionsbauteile, wie Fluidanschlussstücke, die Fluidweiche, die Ausgabeleitungen und die Ausgabedüsen sind dabei zusammengefasst und als integrales, einstückiges Bauteil ausgeführt.

Der Erfindung stellt sich somit das Problem, einen Zentralauslauf für einen Getränkebereiter zur Verfügung zu stellen, der auf einfache Weise gereinigt, gewartet und gegebenenfalls repariert oder ausgetauscht werden kann.

Erfindungsgemäß wird dieses Problem durch einen Zentralauslauf eines Getränkebereiters mit den Merkmalen des Patentanspruchs 1 gelöst.
Vorteilhafte Ausgestaltungen und Weiterbildungen der Erfindung ergeben sich aus den nachfolgenden Unteransprüchen.

Ein Zentralauslauf eines Getränkebereiters, der mehrere, mit einem Strömungsleitungssystem verbundene Fluidanschlussstücke und eine Fluidweiche mit mehreren Ausgabeleitungen, die in je eine Ausgabedüse münden, aufweist, wurde erfindungsgemäß dahingehend weitergebildet, dass die einzelnen Elemente des Zentralauslaufs in einem gemeinsamen Halter aufgenommen sind.
Die mit der Erfindung erreichbaren Vorteile bestehen in der bestechend einfachen Handhabung. So kann der gesamte Zentralauslauf mit seinen einzelnen Elementen aus dem Getränkebereiter entnommen werden, indem lediglich der Halter aus dem Getränkebereiter entfernt wird. Mit der Erfindung wurde folglich eine wesentliche Erleichterung und Verbesserung der Reinigungs-, der Wartungs- und der Reparatur- oder Austauschmöglichkeiten erreicht.

Erfindungsgemäß sind die Fluidanschlussstücke und die Fluidweiche des Zentralauslaufs lösbar in dem Halter aufgenommen.
Die lösbare Verbindung führt zu einem weiteren, wesentlichen Vorteil, der darin besteht das der einmal aus dem Getränkebereiter entnommene Halter von den darauf angeordneten Einzelteilen (Fluidanschlussstücke, Fluidweiche, Ausgabeleitungen, Ausgabedüsen) des Zentralauslaufs getrennt werden kann und zudem auch die Einzelteile des Zentralauslaufs separierbar, das heißt zerlegbar sind. Diese Maßnahme stellt eine zusätzliche Möglichkeit dar, die Reinigung der Einzelteile entscheidend zu verbessern. In der Regel handelt es sich bei den einzelnen Elementen des Zentralauslaufs um spülmaschinenfeste Bauteile, so dass nach der Zerlegung des Zentralauslaufs die Reinigung in einer herkömmlichen Spülmaschine erfolgen kann. Damit werden nicht nur die Strömungsleitungen, sondern auch die Dichtungsbereiche der Elemente des Zentralauslaufs gereinigt, so dass damit ein hohes Maß an Hygiene erreicht werden kann. Die Zerlegung beziehungsweise die Montage der Elemente des Zentralauslaufs stellt außerhalb des Getränkebereiters auch keine Schwierigkeit dar.

Zur Erleichterung der Entnahme des Halters aus dem Getränkebereiter und des Einsetzens des Halters in den Getränkebereiter wird darüber hinaus vorgeschlagen, dass der Halter insgesamt über eine Kupplung lösbar in eine korrespondierende Aufnahme des Getränkebereiters eingesetzt ist.

Der Begriff "Kupplung" ist dabei nicht eng auszulegen. Vielmehr kann entsprechend einem weiterführenden Gedanken dieser Lösung die Kupplung beispielsweise einen Kraft- oder Formschluss mit der Aufnahme bilden oder eine Magnethalterung sein. Hierbei ist beispielsweise als mechanische Verbindung eine Klemm- oder Schnappverbindung ebenso geeignet, wie eine Arretierung mittels eines Spannhebels. Die Magnethalterung stellt hingegen eine bevorzugte und sehr einfach zu handhabende Lösung für eine Kupplung dar.

Neben der Kupplung kann die Entnahme des Zentralauslaufs aus dem Getränkebereiter und das Einsetzen in den Getränkebereiter dadurch erleichtert werden, dass der Halter einen Griff aufweist. Vorzugsweise kann dieser Griff an der Rückseite des Halters vorgesehen sein, das heißt dort, wo keine Elemente des Zentralauslaufs vorhanden sind, was jedoch keine zwingende Bedingung darstellt. Wird der Halter zudem aus einem Kunststoff gefertigt, so besteht die vorteilhafte Möglichkeit, den Griff bereits bei der Herstellung des Halters unmittelbar mit anzuformen, so dass dadurch eine zusätzliche, fertigungstechnische Vereinfachung erreicht wird.

Eine konkrete Ausgestaltung der Erfindung besteht darin, dass der Zentralauslauf Bestandteil eines Kaffeeautomaten ist und ein Wasser beziehungsweise Wasserdampf führendes Fluidanschlussstück, ein Kaffee führendes Fluidanschlussstück und ein Milch führendes Fluidanschlussstück aufweist.

Ein Ausführungsbeispiel der Erfindung wird nachfolgend anhand der beigefügten Zeichnungen näher erläutert. Das gezeigte Ausführungsbeispiel stellt keine Einschränkung auf die dargestellte Variante dar, sondern dient lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
- Figur 1:: eine Darstellung eines Halters mit dem Zentralauslauf sowie zwei Koppeleinheiten in Explosivdarstellung,
- Figur 2:: den Halter aus Figur 1 in einer Ansicht von hinten mit montierten Koppeleinheiten,
- Figur 3:: einen Halter als Einzelteil und einen Zentralauslauf in Explosivdarstellung
und
- Figur 4:: eine Explosivdarstellung des Halters und eines zerlegten Zentralauslaufs.

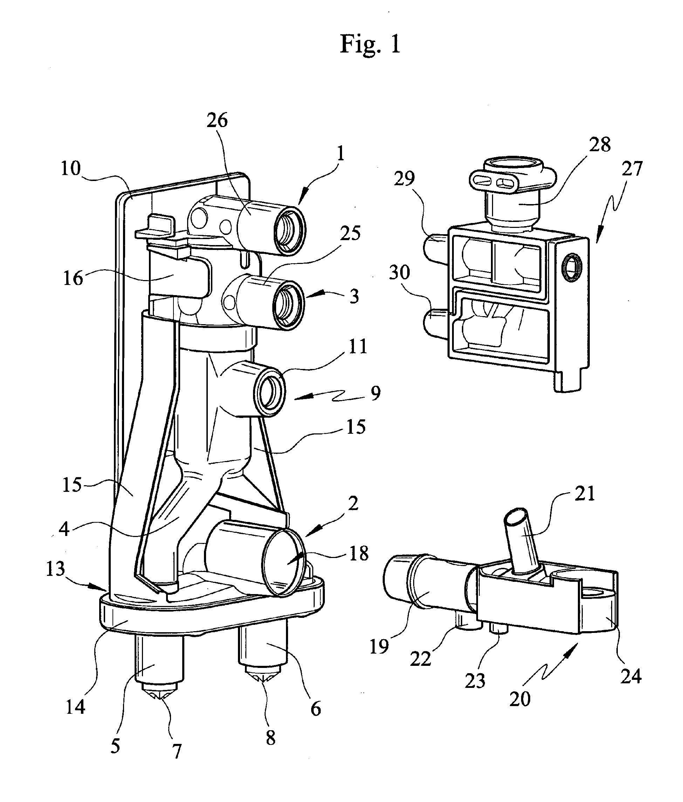

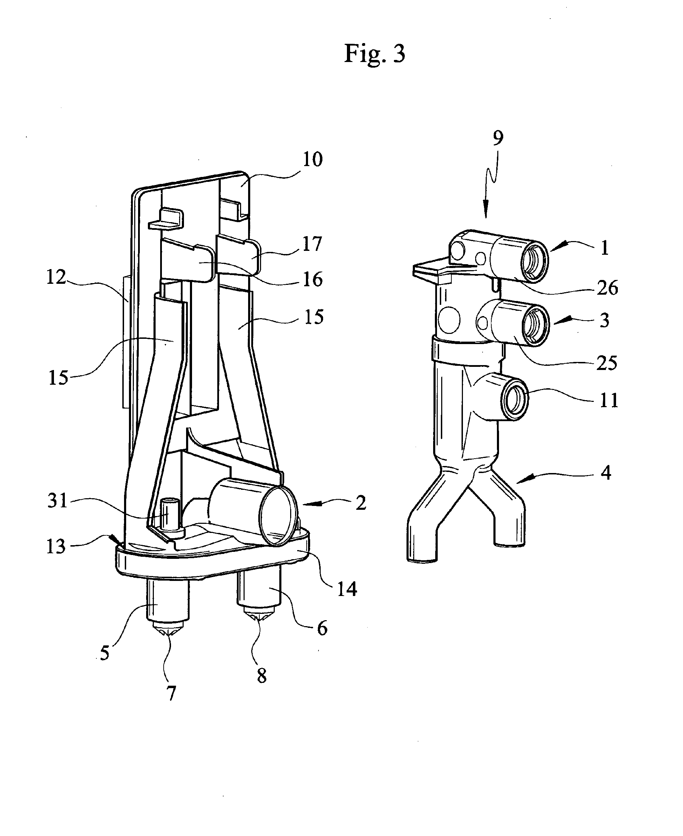

In den in der Figur 1 dargestellten Halter 10 ist ein vollständig montierter Zentralauslauf 9 eingesetzt. Der Halter 10 besteht seinerseits aus einem Kunststoff und ist als einteiliges Bauteil gefertigt. In seinem unteren Abschnitt weist er einen Flansch 13 auf, auf den ein aus Silikon gefertigtes Verteilerelement 14 lösbar aufgesetzt ist. Innerhalb des Verteilerelementes 14 befinden sich Strömungskanäle, in denen gegebenenfalls eine Mischung der gewünschten Getränke erfolgt beziehungsweise über die eine Ausgabe der Getränke möglich ist, wobei hierzu Ausgabeleitungen 5 und 6 sowie Ausgabedüsen 7 und 8 vorhanden sind. Oberhalb des Flansches 13 geht der Halter 10 beidseitig in je einen Steg 15 über. Zwei beabstandet zueinander angeordnete Wangen 16,17 (siehe auch Figur 3) bilden ferner eine mechanische Kupplung, die unter elastischer Vorspannung den montierten Zentralauslauf 9 aufnimmt und am Halter 10 fixiert. Der Zentralauslauf 9 besteht bei dem gezeigten Ausführungsbeispiel seinerseits aus drei Einzelelementen. Im unteren Teil weist der Zentralauslauf 9 eine Fluidweiche 4 auf, die dazu dient ein Getränk beziehungsweise ein Getränkegemisch auf Ausgabeleitungen 5, 6 zu verteilen. Zwischen den Armen der Fluidweiche 4 befindet sich ein Fluidanschlussstück 2, dass über eine Aufnahmeöffnung 18 verfügt, in die ein korrespondierender Flansch 19 einer Koppeleinheit 20 einsetzbar ist. Die Koppeleinheit 20 dient hierbei der Zuführung von Kaffee. Folglich ist an der Koppeleinheit 20 eine Kaffeeleitung 21 vorhanden, über die der frisch gebrühte Kaffee zugeführt wird. Darüber hinaus weist die Koppeleinheit 20 in ihrem unteren Abschnitt einen Anschlag 22, eine Verdrehsicherung 23 sowie einen Haltering 24 zur Befestigung der Koppeleinheit 20 in dem Getränkebereiter auf. Etwa mittig des Zentralauslaufs 9 ist eine Kupplung 11 mit Magnet vorhanden. Der Magnet dient in Verbindung mit einem Reed-Kontakt zur Signalisierung der richtigen Montage des Halters 10 mit dem Zentralauslauf 9. Der Magnet kann zusätzlich eine Fixierungsfunktion ausüben. Die Kupplung 11 und die Fluidweiche 4 sind bei dem dargestellten Ausführungsbeispiel als ein einteiliges, aus Silikon erzeugtes Bauelement ausgeführt.
Darüber hinaus weist der Zentralauslauf 9 ein Fluidanschlussstück 3 zur Zuführung von Milch sowie ein Fluidanschlussstück 1 zur Bereitstellung von Wasser und/oder Wasserdampf auf. Die Fluidanschlussstücke 1 und 3 sind jeweils als separierbare Einzelteile ausgeführt und können dichtend miteinander verbunden werden, wobei die strömungsleitenden Verbindungen jeweils durch einfache Steckverbindungen hergestellt werden. An dem Fluidanschlussstück 3 ist eine Muffe 25 und an dem Fluidanschlussstück 1 ebenfalls eine Muffe 26 vorhanden die einer strömungsleitenden und nach außen dichtenden Verbindung mit einer korrespondierenden Koppeleinheit 27 dient. Diese Koppeleinheit 27 verfügt über einen Anschluss 28 für Wasserdampf /Wasser, über einen Verbindungsflansch 29 für Wasserdampf /Wasser sowie über einen Verbindungsflansch 30 zur Zuführung der Milch. Die Verbindungsflansche 29, 30 werden in die korrespondierenden Muffen 26, 25 der Fluidanschlussstücke 1, 3 eingesetzt.

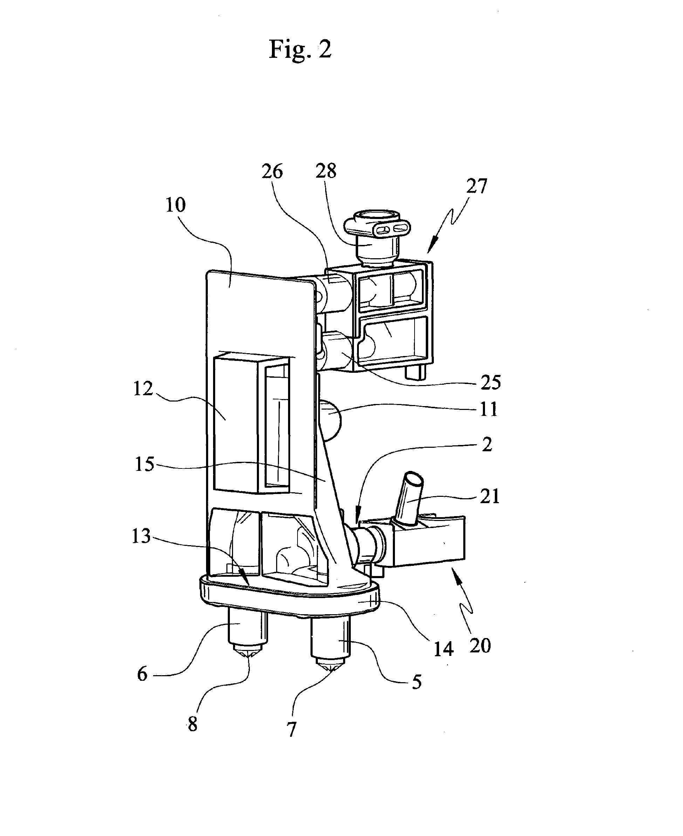

Aus der Darstellung in Figur 2 geht eine Ansicht des Halters 10 von hinten hervor. Auf dieser Rückseite sind keine Bauelemente des Zentralauslaufs 9 angeordnet. Zur Erleichterung der Entnahme des gesamten Halters 10 aus dem Getränkebereiter beziehungsweise zur Vereinfachung des Einsetzens des Halters 10 weist dieser an seiner Rückseite einen Griff 12 auf. Der Griff 12 ist als einteiliges Element unmittelbar an den Halter 10 angeformt und folglich ebenfalls aus dem Grundmaterial Kunststoff des Halters 10 gefertigt.

Die Figur 3 zeigt noch einmal einen Halter 10 und einen vom Halter 10 getrennten Zentralauslauf 9 in Explosivdarstellung. Der Zentralauslauf 9 besteht aus einem Fluidanschlussstück 1, einem mit diesem gekoppelten Fluidanschlussstück 3 sowie einer Fluidweiche 4, die als integralen Bestandteil eine Kupplung 11 aus einem Magneten aufweist. Die Fluidanschlussstücke 1, 3, beziehungsweise die Fluidweiche 4 sind über eine einfache Steckverbindung dichtend miteinander verbunden und können folglich zu Reinigungszwecken auseinandergenommen werden. An dem Halter 10 ist bei dieser Darstellung lediglich ein Anschlusszapfen 31 zu erkennen, von denen am Flansch 13 des Halters 10 jedoch zwei Stück vorhanden sind. Diese Anschlusszapfen 31 dienen der Herstellung einer Verbindung mit der Fluidweiche 4.

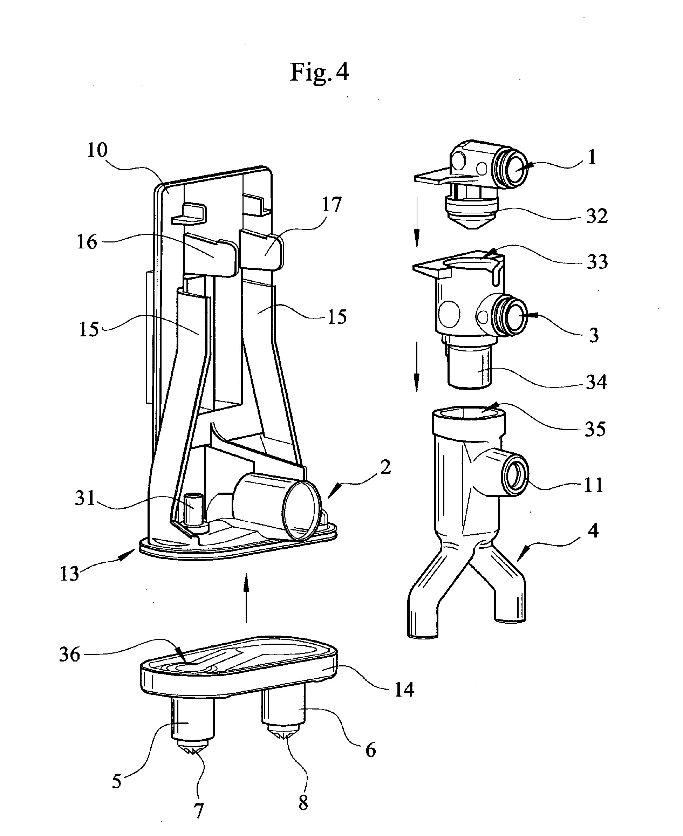

Die bereits angesprochene Möglichkeit, den Zentralauslauf 9 zu zerlegen, geht anschaulich aus der Darstellung in Figur 4 hervor. So kann das Fluidanschlussstück 1 über einen kegelförmig ausgeführten Flansch 32 in eine korrespondierende Öffnung 33 des Fluidanschlussstückes 3 eingesetzt werden. Das Fluidanschlussstück 3 weist in seinem unteren Abschnitt ferner einen zylinderförmig ausgebildeten Flansch 34 auf, der passend und dichtend in die korrespondierende Öffnung 35 der Fluidweiche 4 einsetzbar ist, so dass insgesamt eine nach außen abgedichtete, jedoch strömungsleitende Verbindung innerhalb des gesamten Zentralauslaufs 9 hergestellt wird. Zu bemerken ist hinsichtlich der Figur 4 ferner, dass hieraus das vom Flansch 13 des Halters 10 entfernte Verteilerelement 14 als separates Bauteil erkennbar ist. Das Verteilerelement 14 verfügt in seinem Innenraum über Strömungskanäle 36, die der Zuführung des Getränkes oder eines Mischgetränkes beziehungsweise von Wasser/Wasserdampf zu den Ausgabeleitungen 5, 6 und somit zu den Ausgabedüsen 7, 8 dient.

### BEZUGSZEICHENLISTE

- 1: Fluidanschlussstück
- 2: Fluidanschlussstück
- 3: Fluidanschlussstück
- 4: Fluidweiche
- 5: Ausgabeleitung
- 6: Ausgabeleitung
- 7: Ausgabedüse
- 8: Ausgabedüse
- 9: Zentralauslauf
- 10: Halter
- 11: Kupplung
- 12: Griff
- 13: Flansch
- 14: Verteilerelement
- 15: Steg
- 16: Wange
- 17: Wange
- 18: Aufnahmeöffnung
- 19: Flansch
- 20: Koppeleinheit (Kaffee)
- 21: Kaffeeleitung
- 22: Anschlag
- 23: Verdrehsicherung
- 24: Haltering
- 25: Muffe
- 26: Muffe
- 27: Koppeleinheit
- 28: Anschluss Dampf/Wasser
- 29: Verbindungsflansch
- 30: Verbindungsflansch
- 31: Anschlusszapfen
- 32: Flansch
- 33: Öffnung
- 34: Flansch
- 35: Öffnung
- 36: Strömungskanäle

## Patentansprüche

1. Zentralauslauf eines Getränkebereiters, der mehrere, mit einem Strömungsleitungssystem verbundene Fluidanschlussstücke (1, 2, 3) und eine Fluidweiche (4) mit mehreren Ausgabeleitungen (5, 6), die in je eine Ausgabedüse (7, 8) münden, aufweist,
**dadurch gekennzeichnet, dass**
die einzelnen Elemente des Zentralauslaufs (9) in einem gemeinsamen Halter (10) aufgenommen sind, wobei die als Einzelteile ausgebildeten Fluidanschlussstücke (1, 2, 3), die Fluidweiche (4), die Ausgabeleitungen (5, 6) und die Ausgabedüsen (7, 8) lösbar in dem Halter (10) aufgenommen sind.

2. Zentralauslauf nach Anspruch 1,
**dadurch gekennzeichnet, dass**
der Halter (10) insgesamt über eine Kupplung (11) lösbar in eine korrespondierende Aufnahme des Getränkebereiters eingesetzt ist.

3. Zentralauslauf nach Anspruch 2,
**dadurch gekennzeichnet, dass**
die Kupplung (11) einen Kraft- oder Formschluss mit der Aufnahme bildet oder eine Magnethalterung ist.

4. Zentralauslauf nach einem der vorstehend genannten Ansprüche,
**dadurch gekennzeichnet, dass**
der Halter (10) einen Griff (12) aufweist.

5. Zentralauslauf nach einem der vorstehend genannten Ansprüche,
**dadurch gekennzeichnet, dass**
der Zentralauslauf Bestandteil eines Kaffeeautomaten ist und ein Wasser beziehungsweise Wasserdampf führendes Fluidanschlussstück (1), ein Kaffee führendes Fluidanschlussstück (2) und ein Milch führendes Fluidanschlussstück (3) aufweist.

6. Zentralauslauf nach Anspruch 1,
**dadurch gekennzeichnet, dass** einzelnen Elemente des Zentralauslaufs (9) spülmaschinenfeste Bauteile sind.

7. Zentralauslauf nach Anspruch 1,
**dadurch gekennzeichnet, dass** der Halter (10) mittels zwei zueinander beabstandeten Wangen (16, 17) eine mechanische Kupplung bildet, die unter elastischer Vorspannung den montierten Zentralauslauf (9) aufnehmen und am Halter (10) fixieren kann.

8. Zentralauslauf nach Anspruch 1,
**dadurch gekennzeichnet, dass**
das Fluidanschlussstück (3) zur Zuführung von Milch und das Fluidanschlussstück (1) zur Bereitstellung von Wasser und/oder Wasserdampf durch Steckverbindungen dichtend miteinander verbunden werden können.

## Claims

1. Central discharge of a beverage preparation means comprising a plurality of fluid connectors (1, 2, 3) connected to a flow duct system, and a fluid deflector (4) comprising a plurality of output ducts (5, 6), each of which discharge into an output nozzle (7, 8),
**characterised in that**
the individual elements of the central discharge (9) are accommodated in a common holder (10), the fluid connectors (1, 2, 3), which are formed as individual components, the fluid deflector (4), the output ducts (5, 6) and the output nozzles (7, 8) being releasably accommodated in the holder (10).

2. Central discharge according to claim 1,
**characterised in that**
the holder (10) is, as a whole, releasably inserted into a corresponding socket of the beverage preparation means, by means of a coupling (11).

3. Central discharge according to claim 2,
**characterised in that**
the coupling (11) forms a non-positive or positive fit with the socket or is a magnetic holder.

4. Central discharge according to any of the preceding claims,
**characterised in that**
the holder (10) comprises a handle (12).

5. Central discharge according to any of the preceding claims,
**characterised in that**
the central discharge is a component of a coffee machine and comprises a fluid connector (1) which guides water or water vapour, a fluid connector (2) which guides coffee, and a fluid connector (3) which guides milk.

6. Central discharge according to claim 1,
**characterised in that** the individual elements of the central discharge (9) are dishvwasher-safe components.

7. Central discharge according to claim 1,
**characterised in that** the holder (10) forms a mechanical coupling by means of two mutually spaced side plates (16, 17), which, under resilient pre-tensioning, can accommodate the assembled central discharge (9) and fix it to the holder (10).

8. Central discharge according to claim 1,
**characterised in that**
the fluid connector (3) for supplying milk and the fluid connector (1) for providing water and/or water vapour can be interconnected in a sealing manner by means of plug connections.

## Revendications

1. Sortie centrale d'un préparateur de boissons qui présente plusieurs pièces de raccordement de liquide (1, 2, 3) raccordées à un système de conduites d'écoulement et un dispositif d'embranchement de liquides (4) avec plusieurs conduites de distribution (5, 6) qui débouchent chacune dans une buse de distribution (7, 8),
**caractérisée en ce que**
les différents éléments de la sortie centrale (9) sont logés dans un élément de retenue (10) commun, les pièces de raccordement de liquide (1, 2, 3) constituées en tant que parties individuelles, le dispositif d'embranchement de liquides (4), les conduites de distribution (5, 6) et les buses de distribution (7, 8) étant logés de façon détachable dans l'élément de retenue (10).

2. Sortie centrale selon la revendication 1,
**caractérisée en ce que**
l'élément de retenue (10) est, dans son ensemble, introduit par le biais d'un accouplement (11) de façon détachable dans un logement correspondant du préparateur de boissons.

3. Sortie centrale selon la revendication 2,
**caractérisée en ce que**
l'accouplement (11) forme une liaison de force ou de forme avec le logement ou est une fixation magnétique.

4. Sortie centrale selon une des revendications précédentes,
**caractérisée en ce que**
l'élément de retenue (10) présente une poignée (12).

5. Sortie centrale selon une des revendications précédentes,
**caractérisée en ce que**
la sortie centrale fait partie intégrante d'un distributeur automatique de café et présente une pièce de raccordement de liquide (1) conduisant de l'eau ou respectivement de la vapeur d'eau, une pièce de raccordement de liquide (2) conduisant du café et une pièce de raccordement de liquide (3) conduisant du lait.

6. Sortie centrale selon la revendication 1,
**caractérisée en ce que**
les éléments individuels de la sortie centrale (9) sont des composants lavables en lave-vaisselle.

7. Sortie centrale selon la revendication 1,
**caractérisée en ce que**
l'élément de retenue (10) forme, au moyen de deux joues (16, 17) espacées l'une de l'autre, un accouplement mécanique qui peut, sous une prétension élastique, loger la sortie centrale (9) montée et la fixer sur l'élément de retenue (10).

8. Sortie centrale selon la revendication 1,
**caractérisée en ce que**
la pièce de raccordement de liquide (3) destinée à conduire du lait et la pièce de raccordement de liquide (1) destinée à fournir de l'eau et/ou de la vapeur d'eau peuvent être raccordées l'une à l'autre de façon étanche par des raccordements.
